# EUROPÄISCHE PATENTSCHRIFT

(11) **EP 3 006 701 B1**
(45) Veröffentlichungstag und Bekanntmachung des Hinweises auf die Patenterteilung: **28.12.2016**
(21) Anmeldenummer: 15001147.6
(22) Anmeldetag: 18.04.2015
(51) Int. Cl.: F02D 41/00, F02D 19/06

(54) **VERFAHREN UND VORRICHTUNG ZUM BETREIBEN EINES FAHRZEUGS, INSBESONDERE EINES NUTZFAHRZEUGS**
METHOD AND DEVICE FOR OPERATING A VEHICLE, IN PARTICULAR A COMMERCIAL VEHICLE
PROCÉDÉ ET DISPOSITIF DESTINÉS AU FONCTIONNEMENT D'UN VÉHICULE, EN PARTICULIER UN VÉHICULE UTILITAIRE

(30) Priorität: 07.10.2014 DE 102014014595
(43) Veröffentlichungstag der Anmeldung: 13.04.2016
(73) Patentinhaber: MAN Truck & Bus AG, 80995 München (DE)
(72) Erfinder: Lumpp, Björn, 72770 Reutlingen (DE); Rothe, Dieter, 90403 Nürnberg (DE); Walde, Florian, 90599 Dietenhofen (DE); Pastötter, Christian, 90429 Nürnberg (DE)

(56) Entgegenhaltungen:
- WO-A1-03/031794
- DE-A1-102011 079 041
- DE-A1-102011 115 300

## Beschreibung

Die Erfindung betrifft ein Verfahren zum Betreiben eines Fahrzeugs, insbesondere eines Nutzfahrzeugs, nach dem Oberbegriff des Patentanspruches 1, eine Vorrichtung zum Betreiben eines Fahrzeugs, insbesondere eines Nutzfahrzeugs, nach dem Oberbegriff des Patentanspruches 11 sowie ein Fahrzeug zur Durchführung des Verfahrens und/oder mit der Vorrichtung nach Patentanspruch 16.

Es sind Fahrzeuge bekannt, die mehrere unterschiedliche Kraftstoffe zum Betreiben einer Brennkraftmaschine des Fahrzeugs mitführen. Dabei wird üblicherweise in einem ersten Kraftstofftank ein primärer Kraftstoff zum Betreiben der Brennkraftmäschine gespeichert, während in einem zweiten Kraftstofftank ein sekundärer Kraftstoff zum Betreiben der Brennkraftmaschine gespeichert wird. Bei den beiden Kraftstoffen kann es sich beispielsweise um einen herkömmlichen Kraftstoff zum Betreiben der Brennkraftmaschine, beispielsweise um einen herkömmlichen Dieselkraft-stoff, und einen aus nachwachsenden Rohstoffen hergestellten Kraftstoff, beispielsweise um Biodiesel, handeln.

Aus der DE 29 24 128 A1 ist beispielsweise ein Fahrzeug mit einer Einrichtung zur Einspritzung eines Zündkraftstoffs einerseits und eines zündunwilligen Hauptkraftstoffs andererseits für Dieselmotoren bekannt. Der Zündkraftstoff ist hier herkömmlicher Dieselkraftstoff, während es sich bei dem zündunwilligem Hauptkraftstoff beispielsweise um Bioethanol handelt. Die Einrichtung weist eine spezielle Einspritzdüse auf, die für das nacheinander erfolgende Einspritzen des Zündkraftstoffs und des Hauptkraftstoffs ausgebildet ist.

Des Weiteren ist es auch bekannt, dass bei Fahrzeugen, insbesondere bei Nutzfahrzeugen mit turboaufgeladenen Dieselmotoren, besonders dann Rußemissionen auftreten, wenn die Kraftstoff-Einspritzmenge in einen Brennraum der Brennkraftmaschine erhöht wird. Dieser sogenannte Rußstoß wird durch die Trägheit des Ansaugsystems bzw. durch die Trägheit der Turboaufladung ("Turboloch") verursacht, wodurch für einen kurzen Zeitraum nicht die erforderliche Menge an Verbrennungsluft für die Verbrennung des eingespritzten Kraftstoffs zur Verfügung steht und es im Brennraum der Brennkraftmaschine zu einem lokalen Sauerstoffmangel kommt.

Um diesem Rußstoß entgegenzuwirken bzw. zur Einhaltung der geltenden Abgasvorschriften, insbesondere Euro-VI-Norm, ist es bekannt, regenerierbare Partikelfilter in einem Abgasstrang des Fahrzeugs anzuordnen. Aufgrund der höheren Rußemissionen müssen diese jedoch häufiger regeneriert bzw. die gefilterten Partikel wieder aus dem Partikelfilter entfernt werden. Dies führt jedoch zu einem erhöhten Kraftstoffverbrauch. Zudem ist es auch bekannt, die Erhöhung der Einspritzmenge auf einen definierten Maximalwert zu begrenzen, was jedoch zu einem schlechteren Ansprechverhalten bzw. zu einem langsameren Drehmomentaufbau der Brennkraftmaschine führt.

Aufgabe der Erfindung ist es, ein Verfahren und eine Vorrichtung zum Betreiben eines Fahrzeugs, insbesondere eines Nutzfahrzeugs, bereitzustellen, mittels denen die Schadstoffemissionen des Fahrzeugs auf alternative Weise effektiv und einfach reduziert werden, ohne das Ansprechverhalten der Brennkraftmaschine des Fahrzeugs zu verschlechtem.

Diese Aufgabe wird mit den Merkmalen der unabhängigen Ansprüche gelöst. Bevorzugte Weiterbildungen sind in den Unteransprüchen offenbart.

Gemäß Patentanspruch 1 wird ein Verfahren zum Betreiben eines Fahrzeugs, insbesondere eines Nutzfahrzeugs, vorgeschlagen, wobei das Fahrzeug eine erste Kraftstoff-Speichereinrichtung, insbesondere einen Kraftstofftank, aufweist, in der ein primärer Kraftstoff, insbesondere ein Dieselkraftstoff, zum Betreiben einer Brennkraftmaschine, insbesondere eines Dieselmotors, des Fahrzeugs gespeichert ist, und wobei das Fahrzeug eine zweite Kraftstoff-Speichereinrichtung, insbesondere einen Kraftstofftank, aufweist, in der ein, einen höheren Sauerstoffgehalt als der primäre Kraftstoff aufweisender Oxygenat-Kraftstoff als sekundärer Kraftstoff zum Betreiben der Brennkraftmaschine gespeichert ist. Erfindungsgemäß ist eine Regel- und/oder Steuereinrichtung vorgesehen, mittels der das einem Brennraum der Brennkraftmaschine zugeführte Mengenverhältnis von primärem und sekundärem Kraftstoff in Abhängigkeit von einer aktuellen und/oder zukünftigen bzw. voraussichtlichen zukünftigen Erhöhung der Gesamt-Kraftstoffeinspritzmenge bzw. Gesamt-Kraftstoffzuführmenge in den Brennraum geregelt und/oder gesteuert wird.

Auf diese Weise werden die Schadstoffemissionen des Fahrzeugs auf alternative Weise effektiv und einfach reduziert, da je nach Erhöhung der Gesamt-Kraftstoffeinspritzmenge lediglich das dem Brennraum der Brennkraftmaschine zugeführte Mengenverhältnis von primärem Kraftstoff und sauerstoffreichem Oxygenat-Kraftstoff verstellt bzw. eingestellt wird. So wird beispielsweise bei einer starken Erhöhung der Gesamt-Einspritzmenge der Anteil des Oxygenat-Kraftstoffs in dem der Brennkraftmaschine zugeführten Mengenverhältnis erhöht. Mittels des sauerstoffreichen Oxygenat-Kraftstoffs wird dann die aufgrund der kurzfristig zu geringen Zuführung von Verbrennungsluft fehlende, jedoch für die gewünschte Verbrennung des eingespritzten Kraftstoffs benötigte, Sauerstoffmenge bereitgestellt.
Grundsätzlich können die sauerstoffreichen Oxygenat-Kraftstoffe als jeglicher zum Betreiben der Brennkraftmaschine verwendbarer Kraftstoff ausgebildet sein, der einen höheren Sauerstoffgehalt als die herkömmlichen Kraftstoffe bzw. als der primäre Kraftstoff aufweist. Die Oxygenat-Kraftstoffe können dabei beispielsweise einen definierten Prozentsatz an sauerstöffhaltigen Esthern, Ethern, Alkoholen, Carbonsäuren, Aldehyden und/oder Ketonen aufweisen oder nur aus derartigen Stoffen bestehen. Bevorzugt weisen die Oxygenat-Kraftstoffe jedoch Polyoxymethylenether (OME) der Formel CH₂O(-CH₂O)n-R auf, da diese regenerativ aus Wasserstoff und Kohlendioxid hergestellt werden können (n: 1 bis 5; R: Wasserstoff, Methyl-Rest oder Alkyl-Rest). Weiter bevorzugt können die Oxygenat-Kraftstoffe auch Polyoxyethylenether oder Polypropylenether der Formel (R¹O(CHR²-CH₂-O-)ₙ-R³ aufweisen (n: 1 bis 5; R^{1,2,3}: geradkettiger Alkyl-Rest, verzweigter Alkyl-Rest oder Wasserstoff).

Des Weiteren hat die Bereitstellung des primären und sekundären Kraftstoffs in unterschiedlichen Kraftstoff-Speichereinrichtungen den wesentlichen Vorteil, dass der regelmäßig nur mit erhöhtem Aufwand herstellbare und daher teure Oxygenat-Kraftstoff nur bei Bedarf, beispielsweise bei einer starken Erhöhung der Gesamt-Kraftstoffeinspritzmenge, mit der erforderlichen Menge zudosiert bzw. dem Brennraum der Brennkraftmaschine zugeführt wird. Die Bereitstellung von lediglich einer einzigen Kraftstoff-Speichereinrichtung, in der der primäre und sekundäre Kraftstoff mit einem fest definierten bzw. unveränderbaren Mengenverhältnis gespeichert werden, würde zu einem unnötig hohen Verbrauch des teuren Oxygenat-Kraftstoffs führen.

Weiter kann bei dem erfindungsgemäßen Verfahren das Mengenverhältnis von primärem und sekundärem Kraftstoff je nach Bedarf bzw. Notwendigkeit variiert werden. So kann dem Brennraum beispielsweise nur der primäre Kraftstoff zugeführt werden, wenn dies erforderlich ist. Ebenso kann dem Brennraum auch nur der sekundäre Kraftstoff zugeführt werden.

In einer bevorzugten Verfahrensführung wird, sofern die Erhöhung der Einspritzmenge geringer ist als ein definiert vorgegebener Schwellwert der Erhöhung der Einspritzmenge, dem Brennraum nur der primäre Kraftstoff zugeführt. Sofern die Erhöhung der Einspritzmenge größer ist als der definiert vorgegebene Schwellwert der Erhöhung der Einspritzmenge, wird dem Brennraum dann der primäre und der sekundäre Kraftstoff oder nur der sekundäre Kraftstoff zugeführt. So wird der teure Oxygenat-Kraftstoff nur dann verwendet, wenn dies auch erforderlich ist. Dies ist beispielsweise der Fall, wenn die geltenden Abgasvorschriften nicht eingehalten werden.

Konkret kann mittels der Regel- und/oder Steuereinrichtung mit zunehmender Erhöhung der Einspritzmenge der Anteil des sekundären Kraftstoffs in dem Mengenverhältnis von primären und sekundären Kraftstoff in einem definiert vorgegebenen Maß erhöht werden. Mit abnehmender Erhöhung der Einspritzmenge wird dann mittels der Regel- und/oder Steuereinrichtung der Anteil des sekundären Kraftstoffs in dem Mengenverhältnis von primären und sekundären Kraftstoff in einem definiert vorgegebenen Maß verringert. Auf diese Weise wird das Mengenverhältnis von primären und sekundären Kraftstoff je nach Erhöhung der Einspritzmenge zur Verringerung starker Rußemissionen bedarfsgemäß eingestellt bzw. verstellt.

Bevorzugt ist jeder Kraftstoff-Speichereinrichtung eine Zuführeinrichtung, insbesondere eine Verbindungsleitung und/oder eine Einspritzdüse, zugeordnet, mittels der der jeweilige Kraftstoff dem Brennraum zugeführt wird. Auf diese Weise kann dem Brennraum der Brennkraftmaschine das aktuell erforderliche Mengenverhältnis von primärem und sekundärem Kraftstoff mit einer besonders kurzen Verzögerungszeit zugeführt werden. Dies ist erforderlich, um die Rußemissionen des Fahrzeugs wirksam zu verringern und gleichzeitig den Verbrauch des Oxygenat-Kraftstoffs gering zu halten. Zudem können die separaten Zuführeinrichtungen, insbesondere die separaten Verbindungsleitungen und/oder die separaten Einspritzdüsen, vereinfacht ausgebildet und auf einfache Weise an die Anforderungen des jeweiligen Kraftstoffs und dessen Zuführung angepasst werden.

Alternativ und/oder zusätzlich kann den Kraftstoff-Speichereinrichtungen auch eine gemeinsame Zuführeinrichtung, insbesondere eine Verbindungsleitung und/oder eine Einspritzdüse, zugeordnet sein, mittels der die Kraftstoffe dem Brennraum zugeführt werden. Mittels der gemeinsamen Zuführeinrichtung kann das erfindungsgemäße Verfahren bauteilreduziert und mit besonders geringen konstruktiven Änderungen, insbesondere am Zylinderkopf der Brennkraftmaschine, durchgeführt werden. Bevorzugt ist dabei der Zuführbereich, an dem die Kraftstoffe der gemeinsamen Zuführenrichtung zugeführt werden, in einem definierten Nahbereich im Bereich des Brennraums angeordnet, um die Verzögerungszeit, in der das aktuell gewünschte bzw. erforderliche Mengenverhältnis von primärem und sekundären Kraftstoff in den Brennraum der Brennkraftmaschine gelangt, gering zu halten.

Vorzugsweise wird das dem Brennraum der Brennkraftmaschine zugeführte Mengenverhältnis von primärem und sekundärem Kraftstoff in Abhängigkeit von wenigstens einem fahrzeugseitigen Parameter für die Erhöhung der Einspritzmenge mittels der Regel- und/oder Steuereinrichtung geregelt und/oder gesteuert, wobei bevorzugt vorgesehen ist, dass der wenigstens eine fahrzeugseitige Parameter ein Gradient der Motordrehzahl und/oder ein Gradient der Turboladerdrehzahl und/oder ein Gradient des Ladedrucks und/oder ein Gradient der Gaspedalstellung und/oder ein Gradient des Gaspedalwegs und/oder ein Gradient der Einspritzmenge und/oder das Verbrennungsluftverhältnis ist. Mittels der fahrzeugseitigen Parameter kann die Erhöhung der Einspritzmenge auf besonders einfache Weise und mit einer hohen Genauigkeit ermittelt werden. Konkret können dabei beispielsweise die mittels geeigneter Messeinrichtungen gemessenen Werte der fahrzeugseitigen Parameter mit bereits vorab ermittelten, in der Regel- und/oder Steuereinrichtung gespeicherten Werten verglichen werden. Ausgehend von diesem Vergleich kann dann das erforderliche Mengenverhältnis von primärem und sekundärem Kraftstoff ermittelt und eingestellt werden.

Alternativ und/oder zusätzlich kann das dem Brennraum der Brennkraftmaschine zugeführte Mengenverhältnis von primärem und sekundärem Kraftstoff auch in Abhängigkeit von wenigstens einem Parameter der Fahrzeugumgebung für die Erhöhung der Einspritzmenge mittels der Regel- und/oder Steuereinrichtung geregelt und/oder gesteuert werden, wobei bevorzugt vorgesehen ist, dass der wenigstens eine Parameter der Fahrzeugumgebung mittels GPS-Daten und/oder mittels Aufnahmen wenigstens einer Bild-Erfassungseinrichtung, insbesondere einer Kamera, des Fahrzeugs ermittelt wird. Mittels des wenigstens einen Parameters der Fahrzeugumgebung kann das erforderliche, dem Brennraum der Brennkraftmaschine zuzuführende Mengenverhältnis von primärem und sekundärem Kraftstoff in einigen Verkehrssituationen mit einer hohen Genauigkeit ermittelt werden. Ein Parameter kann dabei beispielsweise das visuelle Signal einer Lichtsignalanlage sein, das beispielsweise mittels einer Bild-Erfassungseinrichtung des Fahrzeugs erkannt wird. Sofern das Fahrzeug aufgrund des Signals der Lichtsignalanlage angehalten werden muss, kann mittels der Bild-Erfassungseinrichtung erfasst werden, wenn sich das Signal ändert und das Fahrzeug wieder weiterfahren darf. Wird dies von der Bild-Erfässungseinrichtung erfasst, kann dann das Mengenverhältnis von primärem und sekundärem Kraftstoff bereits vor der tatsächlichen Erhöhung der Gesamt-Kraftstoffeinspritzmenge, die für die Beschleunigung des Fahrzeugs benötigt wird, verändert werden. Auf diese Weise wird das dem Brennraum der Brennkraftmaschine zugeführte Mengenverhältnis von primärem und sekundärem Kraftstoff in Abhängigkeit von einer zukünftigen Erhöhung der Gesamt-Kraftstoffeinspritzmenge geregelt und/oder gesteuert.

Sofern das Fahrzeug eine Lambdasonde aufweist, wird vorzugsweise mittels der Regel- und/oder Steuereinrichtung in Abhängigkeit von mittels der Lambdasonde gemessenen Messwerten für das Verbrennungsluftverhältnis und den aufgrund des aktuell eingestellten Mengenverhältnis von primärem und sekundärem Kraftstoff erwarteten Sollwerten für das Verbrennungsluftverhältnis die Funktion der Lambdasonde überprüft und/oder wenigstens ein Parameter der Lambdasonde, insbesondere die Empfindlichkeit der Lambdasonde, adaptiert und/oder angepasst. Auf diese Weise kann die Funktion bzw. die Messgenauigkeit der Lambdasonde auf einfach und zuverlässig sichergestellt werden. Konkret kann dabei beispielsweise bei einem konstanten Betriebspunkt der Brennkraftmaschine, bei dem die Brennkraftmaschine ausschließlich mit dem primärem Kraftstoff betrieben wird, der primäre Kraftstoff mit einem definiert vorgegebenen Prozentsatz durch den sekundären Kraftstoff ersetzt werden und der dann gemessene Messwert des Verbrennungsluftverhältnisses mit einem definiert vorgegebenen Sollwert für das Verbrennungsluftverhältnis verglichen werden. Auf Basis dieses Vergleichs kann dann die Funktion der Lambdasonde überprüft und/oder der wenigstens eine Parameter der Lambdasonde adaptiert bzw. angepasst werden.

Weiter bevorzugt ist in der Regel- und/oder Steuereinrichtung, insbesondere mittels wenigstens eines Kennfelds, der zu erwartende zeitliche Verlauf des Drehmoments in Abhängigkeit von der Erhöhung der Gesamt-Einspritzmenge gespeichert und/oder hinterlegt. Das Mengenverhältnis von primärem und sekundärem Kraftstoff wird dann in Abhängigkeit von diesem zu erwartenden zeitlichen Verlauf mittels der Regelund/oder Steuereinrichtung geregelt und/oder gesteuert. Dadurch kann die Zuführung des Oxygenat-Kraftstoffs auf einfache und effektive Weise optimiert werden. Beispielsweise kann die Zuführung des Oxydinat-Kraftstoffs wieder beendet oder reduziert werden, wenn das gewünschte Drehmoment der Brennkraftmaschine erreicht wird.

Sofern das Fahrzeug ein Abgasrückführungssystem aufweist, wird bevorzugt die Menge des rückgeführten Abgases mittels der Regel- und/oder Steuereinrichtung in Abhängigkeit von dem Mengenverhältnis von primärem und sekundärem Kraftstoff gesteuert und/oder geregelt. Auf diese Weise können die Schadstoffemissionen des Fahrzeugs auf besonders effektive Weise verringert werden. Bevorzugt wird dabei einer Erhöhung des Anteils des sekundären Kraftstoffs in dem Mengenverhältnis von primärem und sekundärem Kraftstoff die Menge des rückgeführten Abgases erhöht, um die in dem rußärmeren Abgas der Brennkraftmaschine enthaltenden Stickoxide besonders effektiv zu reduzieren.

Sofern das Fahrzeug einen regenerierbaren Partikelfilter aufweist, wird vorzugsweise der Zeitpunkt, zu dem der Partikelfilter regeneriert wird, mittels der Regel- und/oder Steuereinrichtung in Abhängigkeit von dem Mengenverhältnis von primärem und sekundärem Kraftstoff gesteuert und/oder geregelt. Auf diese Weise wird der Partikelfilter genau dann regeneriert werden, wenn er regeneriert werden muss bzw. wenn die Speicherfähigkeit des Partikelfilters deutlich nachlässt. Besonders bevorzugt wird während einer Regeneration des Partikelfilters der Anteil des sekundären Kraftstoffs in den Mengenverhältnis von primärem und sekundärem Kraftstoff erhöht, um eine besonders effektive Regeneration des Partikelfilters durchführen zu können.

Zur Lösung der bereits genannten Aufgabe wird ferner eine Vorrichtung zum Betreiben eines Fahrzeugs, insbesondere eines Nutzfahrzeugs, beansprucht, wobei das Fahrzeug eine erste Kraftstoff-Speichereinrichtung, insbesondere einen Kraftstofftank, aufweist, in der ein primärer Kraftstoff, insbesondere ein Dieselkraftstoff, zum Betreiben einer Brennkraftmaschine, insbesondere eines Dieselmotors, des Fahrzeugs gespeichert ist, und wobei das Fahrzeug eine zweite Kraftstoff-Speichereinrichtung, insbesondere einen Kraftstofftank, aufweist, in der ein, einen höheren Sauerstoffgehalt als der primäre Kraftstoff aufweisender Oxydinat-Kraftstoff als sekundärer Kraftstoff zum Betreiben der Brennkraftmaschine gespeichert ist. Erfindungsgemäß ist eine Regel- und/oder Steuereinrichtung vorgesehen, mittels der das einem Brennraum der Brennkraftmaschine zugeführte Mengenverhältnis von primärem und sekundärem Kraftstoff in Abhängigkeit von einer aktuellen und/oder zukünftigen bzw. voraussichtlichen zukünftigen Erhöhung der Gesamt-Kraftstoffeinspritzmenge bzw. Gesamt-Kraftstoffzuführmenge in den Brennraum regelbar und/oder steuerbar ist.

Die sich aus der erfindungsgemäßen Vorrichtung ergebenden Vorteile sind identisch mit den bereits gewürdigten Vorteilen der erfindungsgemäßen Verfahrensführung, so dass diese an dieser Stelle nicht wiederholt werden.

In einer bevorzugten Ausgestaltung der erfindungsgemäßen Vorrichtung ist jeder Kraftstoff-Speichereinrichtung eine Zuführeinrichtung, insbesondere eine Verbindungsleitung und/oder eine Einspritzdüse, zugeordnet, mittels der der jeweilige Kraftstoff dem Brennraum zugeführt werden kann. Die sich daraus ergebenden Vorteile wurden ebenfalls bereits bei der erfindungsgemäßen Verfahrensführung erwähnt und werden hier nicht wiederholt.

Vorzugsweise sind mittels der Zuführeinrichtungen der primäre Brennstoff und der sekundäre Brennstoff unmittelbar dem Brennraum der Brennkraftmaschine zuführbar. Auf diese Weise wird die Verzögerungszeit, in der das aktuell gewünschte Mengenverhältnis von primärem und sekundärem Kraftstoff dem Brennraum zugeführt wird, besonders gering gehalten. Alternativ und/oder zusätzlich kann mittels der Zuführeinrichtungen der primäre Brennstoff unmittelbar dem Brennraum der Brennkraftmaschine und der sekundäre Brennstoff einem dem Brennraum Verbrennungsluft zuführenden Ansaugtrakt des Fahrzeugs zugeführt werden. Durch die Zuführung des sekundären Brennstoffs in den Ansaugtrakt wird die konstruktive Ausgestaltung der Brennkraftmaschine, insbesondere des Zylinderkopfs der Brennkraftmaschine, und der Zuführeinrichtungen zur Zuführung der Kraftstoffe deutlich vereinfacht.

Alternativ und/oder zusätzlich zu den mehreren Zuführeinrichtungen kann den Kraftstoff-Speichereinrichtungen auch eine gemeinsame Zuführeinrichtung, insbesondere eine gemeinsame Verbindungsleitung und/oder eine gemeinsame Einspritzdüse, zugeordnet sein, mittels der die Kraftstoffe dem Brennraum zugeführt werden fönnen, wobei bevorzugt vorgesehen ist, dass der Zuführbereich, an dem die Kraftstoffe der gemeinsamen Zuführeinrichtung zugeführt werden, in einem definierten Nahbereich im Bereich des Brennraums angeordnet ist. Die sich daraus ergebenden Vorteile wurden bereits bei der erfindungsgemäßen Verfahrensführung erläutert und werden an dieser Stelle nicht wiederholt.

Bevorzugt ist der Zuführbereich, in Kraftstoff-Strömungsrichtung des primären Kraftstoffs gesehen, stromab einer zugeordneten Filtereinrichtung zur Filterung des primären Kraftstoffs und/oder stromab einer Fördereinrichtung, insbesondere einer Pumpe, zur Förderung des primären Kraftstoffs und/oder stromab einer Kraftstoff-Verteilungseinrichtung, insbesondere eines Verteilerrohrs, zur Verteilung des primären Kraftstoffs auf die mehreren Brennräume der Brennkraftmaschine angeordnet. Der Zuführbereich ist dann auch, in Kraftstoff-Strömungsrichtung des sekundären Kraftstoffs gesehen, stromab einer zugeordneten Filtereinrichtung zur Filterung des sekundären Kraftstoffs und/oder stromab einer Fördereinrichtung, insbesondere einer Pumpe, zur Förderung des sekundären Kraftstoffs und/oder stromab einer Kraftstoff-Verteilungseinrichtung, insbesondere eines Verteilerrohrs, zur Verteilung des sekundären Kraftstoffs auf die mehreren Brennräume der Brennkraftmaschine angeordnet. Auf diese Weise wird die Verzögerungszeit, in der das aktuell gewünschte Mengenverhältnis von primärem und sekundärem Kraftstoff dem Brennraum zugeführt wird, besonders gering gehalten, da in den genannten Einrichtungen stets ein großes Volumen an primärem Kraftstoff gespeichert ist.

Des Weiteren wird ein Fahrzeug, insbesondere ein Nutzfahrzeug, zur Durchführung des erfindungsgemäßen Verfahrens und/oder mit der erfindungsgemäßen Vorrichtung beansprucht. Die sich daraus ergebenden Vorteile sind identisch mit den bereits gewürdigten Vorteilen des erfindungsgemäßen Verfahrens und der erfindungsgemäßen Vorrichtung, so dass diese an dieser Stelle nicht wiederholt werden.

Die vorstehend erläuterten und/oder in den Unteransprüchen wiedergegebenen vorteilhaften Aus- und/oder Weiterbildungen der Erfindung können-außer zum Beispiel in den Fällen eindeutiger Abhängigkeiten oder unvereinbarer Alternativen, einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer Ansicht von vorne einen Lastkraftwagen mit der erfindungsgemäßen Vorrichtung;
- Fig. 2: in einer schematischen Darstellung eine erste Ausführungsform einer Zuführeinrichtung zur Zuführung eines primären und eines sekundären Kraftstoffs in einen Brennraum einer Brennkraftmaschine;
- Fig. 3: in einer schematischen Darstellung eine zweite Ausführungsform der Zuführeinrichtung;
- Fig. 4: in einer schematischen Darstellung eine dritte Ausführungsform der Zuführeinrichtung;
- Fig. 5: in einer schematischen Darstellung eine vierte Ausführungsform der Zuführeinrichtung;
- Fig. 6: ein Liniendiagramm, anhand dem die Funktionsweise der erfindungsgemäßen Vorrichtung erläutert wird; und
- Fig. 7: ein Flussdiagramm, in dem der Ablauf des erfindungsgemäßen Verfahrens zusammenfassend dargestellt ist.

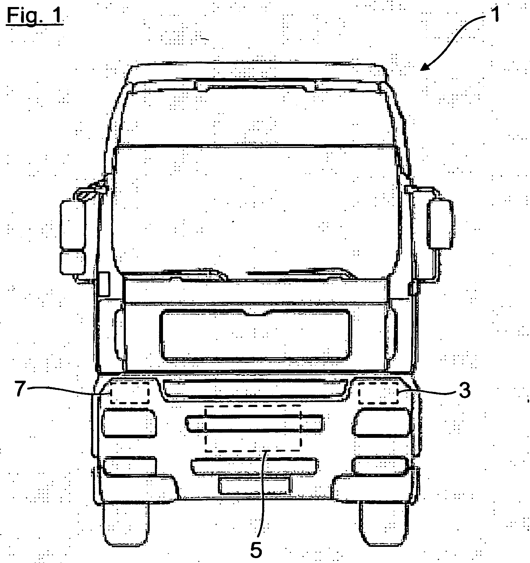

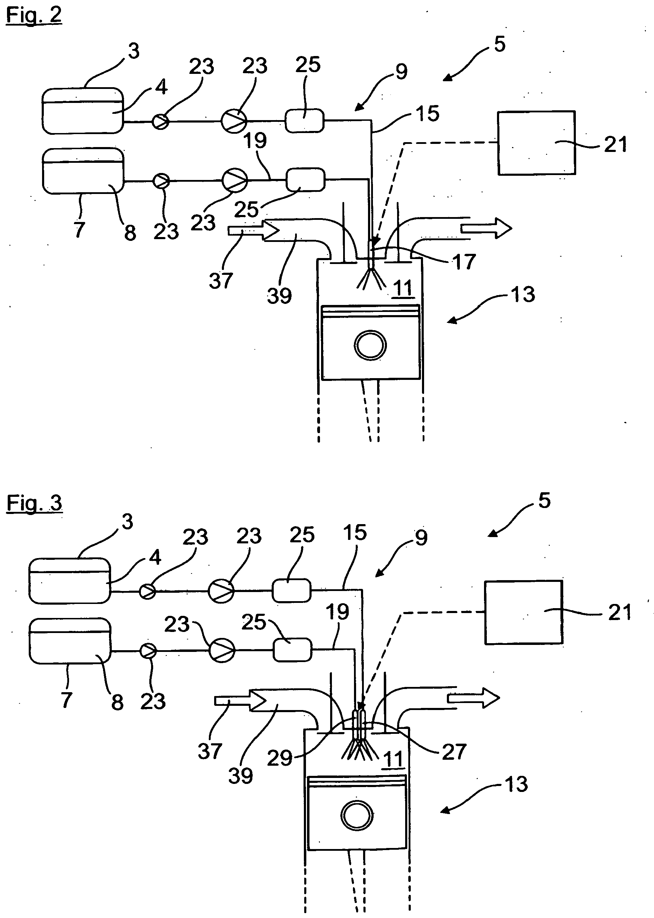

In Fig. 1 ist ein als Lastkraftwagen 1 ausgebildetes Fahrzeug gezeigt. Der Lastkraftwagen 1 weist eine in Fig. 1 mit gestrichelten Linien angedeutete erste Kraftstoff-Speichereinrichtung, hier beispielhaft einen ersten Kraftstofftank 3 auf, in der ein primärer Kraftstoff 4 (Fig. 2), beispielsweise ein Dieselkraftstoff, zum Betreiben einer in Fig. 1 ebenfalls mit gestrichelten Linien angedeuteten Brennkraftmaschine 5, beispielsweise eines Dieselmotors, des Lastkraftwagens 1 gespeichert ist. Zudem weist der Lastkraftwagen 1 auch eine in Fig. 1 ebenfalls mit gestrichelten Linien angedeutete zweite Kraftstoff-Speichereinrichtung, hier ein beispielhaft einen zweiten Kraftstofftank 7 auf, in der ein saüerstoffreicher Oxygenat-Kraftstoff als sekundärer kraftstoff 8 (Fig. 2) zum Betreiben der Brennkraftmaschine 5 gespeichert ist.

In Fig. 2 ist eine Zuführeinrichtung 9 zur Zuführung des primären und sekundären Kraftstoffs 4, 8 in einen Brennraum 11 einer Zylinder-Kolben-Einheit 13 der Brennkraftmaschine 5 schematisch gezeigt. Die Zuführeinrichtung 9 weist ein dem ersten Kraftstofftank 3 zugeordnetes Verbindungselement, hier beispielhaft eine Verbindungsleitung 15, auf, mittels dem der in dem ersten Kraftstofftank 3 gespeicherte primäre Kraftstoff 4 einer der Zylinder-Kolben-Einheit 13 zugeordneten Kraftstoff-Einspritzdüse 17 zugeführt wird. Zudem weist die Zuführeinrichtung 9 hier auch ein dem zweiten Kraftstofftank 7 zugeordnetes Verbindungselement, hier beispielhaft eine Verbindungsleitung 19, auf, mittels dem der in dem zweiten Kraftstofftank 7 gespeicherte sekundäre Kraftstoff 8 ebenfalls der Einspritzdüse 17 zugeführt wird. Die Einspritzdüse 17 ist hier somit als gemeinsame Einspritzdüse 17 ausgebildet, mittels der der primäre und der sekundäre Kraftstoff 4, 8 bedarfsweise dem Brennraum 11 der Zylinder-Kolben-Einheit 13 zugeführt bzw. in den Brennraum 11 der Zylinder-Kolben-Einheit 13 eingespritzt werden können.

Konkret kann die gemeinsame Einspritzdüse 17 dabei beispielsweise mittels zweier Nadelventile ausgebildet sein, wobei mittels eines der beiden Nadelventile die Einspritzmenge des primären Kraftstoffs 4 und mittels des anderen der beiden Nadelventile die Einspritzmenge des sekundären Kraftstoffs 8 in den Brennraum 11 der Zylinder-Kolben-Einheit 13 je nach Bedarf eingestellt werden kann.

Wie in Fig. 2 weiter gezeigt ist, ist die gemeinsame Einspritzdüse 17 signaltechnisch mit einer Regel- und/oder Steuereinrichtung 21 verbunden. Mittels der Regelund/oder Steuereinrichtung 21 werden die dem Brennraum 11 der Zylinder-KolbenEinheit 13 zugeführten Mengen an primärem und sekundärem Kraftstoff 4, 8 gesteuert. Es werden daher sowohl die Gesamt-Kraftstoffeinspritzmenge als auch das dem Brennraum 11 der Zylinder-Kolben-Einheit 13 zugeführte Mengenverhältnis von primärem und sekundärem Kraftstoff 4, 8 mittels der Regel- und/oder Steuereinrichtung 21 gesteuert. Die Steuerung des Mengenverhältnisses erfolgt dabei in Abhängigkeit von aktuellen und zukünftigen bzw. voraussichtlichen zukünftigen Erhöhungen der Gesamt-Kraftstoffeinspritzmenge.

Konkret wird hier beispielhaft mittels der Regel- und/oder Steuereinrichtung 21 mit zunehmender Erhöhung der Gesamt-Kraftstoffeinspritzmenge der Anteil des sekundären Kraftstoffs 8 in dem Mengenverhältnis von primärem und sekundärem Kraftstoff 4, 8 in einem definiert vorgegebenen Maß erhöht, während mit abnehmender Erhöhung der Gesamt-Kraftstoffeinspritzmenge der Anteil des sekundären Kraftstoffs 8 in dem Mengenverhältnis von primärem und sekundärem Kraftstoffs 4, 8 mittels der Regel- und/oder Steuereinrichtung 21 in einem definiert vorgegebenen Maß verringert wird.

Zudem wird das Mengenverhältnis von primärem und sekundärem Kraftstoff 4, 8 hier derart mittels der Regel- und/oder Steuereinrichtung 21 gesteuert, dass, sofern die Erhöhung der Gesamt-Kraftstoffeinspritzmenge geringer ist als ein definiert vorgegebener Schwellwert der Erhöhung der Gesamt-Kraftstoffeinspritzmenge, dem Brennraum 11 nur der primäre Kraftstoff 4 des ersten Kraftstofftanks 3 zugeführt wird. Sofern die Erhöhung der Gesamt-Kraftstoffeinspritzmenge größer ist als der definiert vorgegebene Schwellwert, wird dem Brennraum 11 dann entweder sowohl der primäre als auch der sekundäre Kraftstoff 4, 8 oder der sekundäre Kraftstoff 8 allein zugeführt. Bei einer besonders starken Erhöhung der Gesamt-Kraftstoffeinspritzmenge wird dabei vorzugsweise lediglich der sekundäre Kraftstoff 8 dem Brennraum 11 zugeführt. Bei einer nicht allzu starken Erhöhung der Gesamt-Kraftstoffeinspritzmenge werden dem Brennraum 11 dann sowohl der primäre als auch der sekundäre Kraftstoff 4, 8 zugeführt.

Wie aus Fig. 2 weiter hervorgeht, sind den Verbindungsleitungen 15, 19 Fördereinrichtungen, hier beispielhaft Pumpen 23, zugeordnet, mittels denen der primäre und sekundäre Kraftstoff 4, 8 der gemeinsamen Einspritzdüse 17 zugeführt werden. Jede Verbindungsleitung 15, 19 weist hier beispielhaft zwei Pumpen 23 zur Förderung des jeweiligen Kraftstoffs 4, 8 auf. Eine, in Kraftstoff-Strömungsrichtung gesehen, unmittelbar nach dem jeweiligen Kraftstofftank 3, 7 angeordnete Pumpe 23 ist dabei als Niederdruckpumpe ausgeführt, während die weiter stromab angeordnete Pumpe 23 als Hochdruckpumpe ausgeführt ist. In Kraftstoff-Strömungsrichtung gesehen, stromab der Pumpen 23 weist jede der Verbindungsleitungen 15, 19 zudem eine Kraftstoffverteilungs-Einrichtung, hier beispielhaft ein Verteilerrohr 25, auf, mittels dem der jeweilige Kraftstoff 4, 8 auf die mehreren Brennräume der Brennkraftmaschine 5, von denen in den Figuren lediglich der Brennraum 11 der Zylinder-KolbenEinheit 13 gezeigt ist, verteilt wird.

In Fig. 3 ist eine zweite Ausführungsform der Zuführeinrichtung 9 gezeigt. Die Zuführeinrichtung 9 weist hier keine gemeinsame Einspritzdüse 17 zur Zuführung des primären und sekundären Kraftstoffs 4, 8 in den Brennraum 11 der Zylinder-Kolben-Einheit 13 auf, sondern eine erste Einspritzdüse 27 zur Zuführung des primären Kraftstoffs 4 in den Brennraum 11 und eine zweite Einspritzdüse 29 zur Zuführung des sekundären Kraftstoffs 8 in den Brennraum 11. Auf diese Weise wird der Aufbau der Einspritzdüsen 27, 29 deutlich vereinfacht. Die Zuführung des primären und sekundären Kraftstoffs 4, 8 wird hier mittels der Regel- und/oder Steuereinrichtung 21 identisch wie bei der in Fig. 2 gezeigten ersten Ausführungsform der Zuführeinrichtung 9 gesteuert.

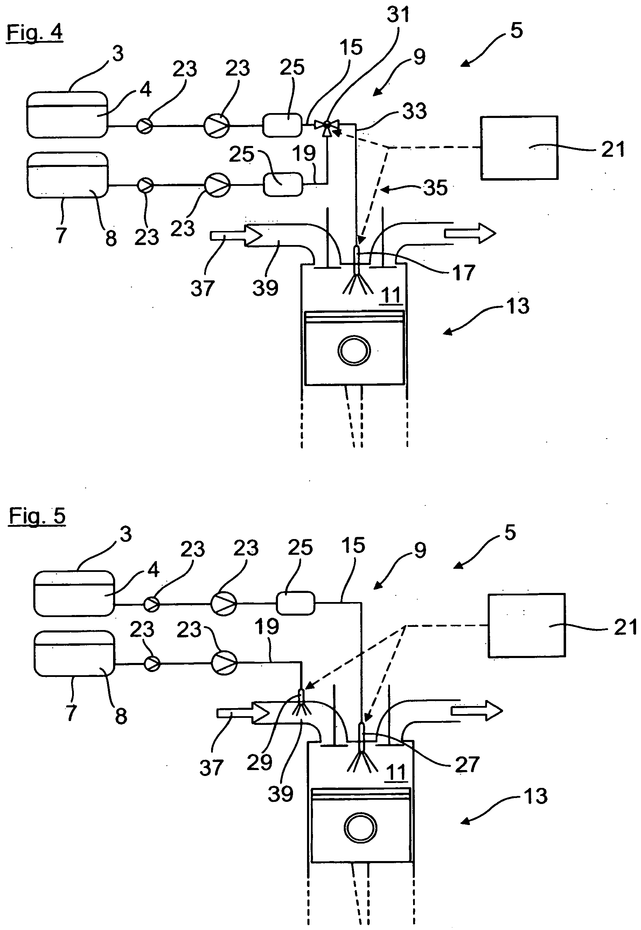

In Fig. 4 ist eine dritte Ausführungsform der Zuführeinrichtung 9 gezeigt. Im Vergleich zur ersten Ausführungsform der Zuführeinrichtung 9 gemäß Fig. 2 sind die Verbindungsleitungen 15, 19 hier nicht unmittelbar an die gemeinsame Einspritzdüse 17 angeschlossen, sondern an eine Ventileinrichtung, hier beispielhaft ein Mehrwege-Ventil 31. An das Mehrwege-Ventil 31 ist zudem auch ein gemeinsames Verbindungselement, hier beispielhaft eine Verbindungsleitung 33, angeschlossen, mittels dem der primäre und sekundäre Kraftstoff 4, 8 der gemeinsamen Einspritzdüse 17 zugeführt werden. Mittels des Mehrwege-Ventils 31 wird hier das Mengenverhältnis von primärem und sekundärem Kraftstoff 4, 8 eingestellt. Das Mehrwege-Ventil 31 ist signaltechnisch mit der Regel- und/oder Steuereinrichtung 21 verbunden und wird zusammen mit der gemeinsamen Einspritzdüse 17 mittels der Regel- und/oder Steuereinrichtung 21 gesteuert.

Die gemeinsame Einspritzdüse 17 ist hier im Vergleich zu der in Fig. 2 gezeigten ersten Ausführungsform der Zuführeinrichtung 9 deutlich vereinfacht ausgebildet, da mittels dieser nun nicht mehr das dem Brennraum 11 zugeführte Mengenverhältnis von primärem und sekundärem Kraftstoff 4, 8 eingestellt wird. Die Einstellung des Mengenverhältnisses erfolgt bereits mittels des Mehrwege-Ventils 31. Des Weiteren ist das Mehrwege-Ventil 31 hier, in Kräftstoff-Strömungsrichtung gesehen, stromab der Pumpen 23 und der Verteilerrohre 25 und in einem definierten Nahbereich 35 im Bereich des Brennraums 11 angeordnet. Auf diese Weise wird die Verzögerungszeit, in der das aktuell erforderliche Mengenverhältnis von primärem und sekundärem Kraftstoff 4, 8 dem Brennraum 11 zugeführt wird, gering gehalten.

In Fig. 5 ist eine vierte Ausführungsform der Zuführeinrichtung 9 gezeigt. Im Vergleich zu der in Fig. 3 gezeigten zweiten Ausführungsform der Zuführeinrichtung 9 ist die Einspritzdüse 29 hier nicht dem Brennraum 11 zugeordnet, sondern einem dem Brennraum 11 Verbrennungsluft 37 zuführenden Ansaugtrakt 39. Auf diese Weise wird die konstruktive Ausgestaltung der Zylinder-Kolben-Einheit 13 deutlich vereinfacht. Die Zuführung des primären und sekundären Kraftstoffs 4, 8 wird hier mittels der Regel- und/oder Steuereinrichtung 21 identisch wie bei der in Fig. 3 gezeigten zweiten Ausführungsform der Zuführeinrichtung 9 gesteuert.

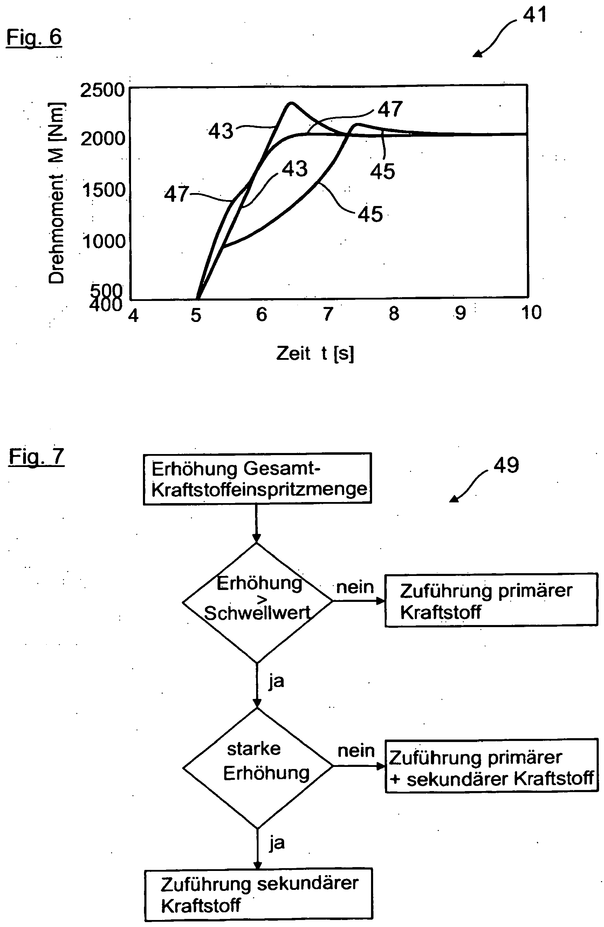

In Fig. 6 ist ein Liniendiagramm 41 gezeigt, das als Ordinate ein Drehmoment M der Brennkraftmaschine 5 und als Abszisse eine Zeit t aufweist. In das Diagramm 41 sind mehrere Kurven 43, 45, 47 eingetragen, die den zeitlichen Verlauf des Drehmoments M der Brennkraftmaschine 5 bei einer Erhöhung der Gesamt-Kraftstoffeinspritzmenge um einen definierten Wert zeigen. Die Kurve 43 zeigt dabei den zeitlichen Verlauf des Drehmoments M, wenn der Brennkraftmaschine 5 lediglich der primäre Kraftstoff zugeführt wird und der Wert der Änderung der Gesamt-Kraftstoffeinspritzmenge über die Zeit t nicht begrenzt wird. Bei dieser Betriebsweise der Brennkraftmaschine 5 werden von der Brennkraftmaschine 5 hohe Rußmengen emittiert. Die Kurve 45 zeigt den zeitlichen Verlauf des Drehmoments M, wenn der Brennkraftmaschine 5 lediglich der primäre Kraftstoff zugeführt wird und der Wert der Änderung der Gesamt-Kraftstoffeinspritzmenge über die Zeit t begrenzt wird. Bei dieser Betriebsweise der Brennkraftmaschine 5 werden von der Brennkraftmaschine 5 deutlich weniger Rußmengen emittiert, jedoch weist die Brennkraftmaschine 5 hier ein deutlich schlechteres Ansprechverhalten auf. Die Kurve 47 zeigt den zeitlichen Verlauf des Drehmoments M, wenn der Brennkraftmaschine 5 lediglich der sekundäre Kraftstoff zugeführt wird und der Wert der Änderung der Gesamt-Kraftstoffeinspritzmenge über die Zeit t nicht begrenzt wird. Bei dieser Betriebsweise der Brennkraftmaschine 5 werden von der Brennkraftmaschine 5 geringe Rußmengen emittiert und die Brennkraftmaschine 5 weist ein gutes Ansprechverhalten auf.

In Fig. 7 ist ein Flussdiagramm 49 gezeigt, in dem der Ablauf des erfindungsgemäßen Verfahrens nochmals zusammenfassend dargestellt ist.

### Bezuaszeichenliste

- 1: Lastkraftwagen
- 3: erster Kraftstofftank
- 4: primärer Kraftstoff
- 5: Brennkraftmaschine
- 7: zweiter Kraftstofftank
- 8: sekundärer Kraftstoff
- 9: Zuführeinrichtung
- 11: Brennraum
- 13: Zylinder-Kolben-Einheit
- 15: Verbindungsleitung
- 17: gemeinsame Einspritzdüse
- 19: Verbindungsleitung
- 21: Regel- und/oder Steuereinrichtung
- 23: Pumpe
- 25: Verteilerrohr
- 27: erste Einspritzdüse
- 29: zweite Einspritzdüse
- 31: Mehrwege-Ventil
- 33: gemeinsame Verbindungsleitung
- 35: Nahbereich
- 37: Verbrennungsluft
- 39: Ansaugtrakt
- 41: Liniendiagramm
- 43: Kurve
- 45: Kurve
- 47: Kurve
- 49: Flussdiagramm
- M: Drehmoment
- t: Zeit

## Patentansprüche

1. Verfahren zum Betreiben eines Fahrzeugs, insbesondere eines Nutzfahrzeugs, wobei das Fahrzeug (1) eine erste Kraftstoff-Speichereinrichtung (3), insbesondere einen Kraftstofftank, aufweist, in der ein primärer Kraftstoff (4), insbesondere ein Dieselkraftstoff, zum Betreiben einer Brennkraftmaschine (5), insbesondere eines Dieselmotors, des Fahrzeugs (1) gespeichert ist, und wobei das Fahrzeug (1) eine zweite Kraftstoff-Speichereinrichtung (7), insbesondere einen Kraftstofftank, aufweist, in der ein, einen höheren Sauerstoffgehalt als der primäre Kraftstoff aufweisender Oxygenat-Kraftstoff als sekundärer Kraftstoff (8) zum Betreiben der Brennkraftmaschine (5) gespeichert ist,
**dadurch gekennzeichnet,**
**dass** eine Regel- und/oder Steuereinrichtung (21) vorgesehen ist, mittels der das einem Brennraum (11) der Brennkraftmaschine (5) zugeführte Mengenverhältnis von primären und sekundären Kraftstoff (4, 8) in Abhängigkeit von einer aktuellen und/oder zukünftigen Erhöhung der Gesamt-Kraftstoffeinspritzmenge in den Brennraum (11) geregelt und/oder gesteuert wird.

2. Verfahren nach Anspruch 1, **dadurch gekennzeichnet, dass**, sofern die Erhöhung der Gesamt-Kraftstoffeinspritzmenge geringer ist als ein definiert vorgegebener Schwellwert der Erhöhung der Gesamt-Kraftstoffeinspritzmenge, dem Brennraum (11) nur der primäre Kraftstoff (4) zugeführt wird, und dass, sofern die Erhöhung der Gesamt-Kraftstoffeinspritzmenge größer ist als der definiert vorgegebene Schwellwert der Erhöhung der Gesamt-Kraftstoffeinspritzmenge, dem Brennraum (11) der primäre und der sekundäre Kraftstoff (4, 8) oder nur der sekundäre Kraftstoff (8) zugeführt wird.

3. Verfahren nach Anspruch 1 oder 2, **dadurch gekennzeichnet, dass** mittels der Regel- und/oder Steuereinrichtung (21) mit zunehmender Erhöhung der Gesamt-Kraftstoffeinspritzmenge der Anteil des sekundären Kraftstoffs (8) in dem Mengenverhältnis von primären und sekundären Kraftstoff (4, 8) in einem definiert vorgegebenen Maß erhöht wird, und dass mittels der Regelund/oder Steuereinrichtung (21) mit abnehmender Erhöhung der Gesamt-Kraftstoffeinspritzmenge der Anteil des sekundären Kraftstoffs (8) in dem Mengenverhältnis von primären und sekundären Kraftstoff (4, 8) in einem definiert vorgegebenen Maß verringert wird.

4. Verfahren nach einem der vorhergehenden Ansprüche, **dadurch gekennzeichnet, dass** jeder Kraftstoff-Speichereinrichtung (3, 7) eine separate Zuführeinrichtung (15, 17, 27, 29), insbesondere eine separate Verbindungsleitung und/oder eine separate Einspritzdüse, zugeordnet ist, mittels der der jeweilige Kraftstoff (4, 8) dem Brennraum (11) zugeführt wird, und/oder dass den Kraftstoff-Speichereinrichtungen (3, 7) eine gemeinsame Zuführeinrichtung (17, 33), insbesondere eine gemeinsame Verbindungsleitung und/oder eine gemeinsame Einspritzdüse, zugeordnet ist, mittels der die Kraftstoffe (4, 8) dem Brennraum (11) zugeführt werden, wobei bevorzugt vorgesehen ist, dass der Zuführbereich (31), an dem die Kraftstoffe (4, 8) der gemeinsamen Zuführeinrichtung (17, 33) zugeführt werden, in einem definierten Nahbereich (35) im Bereich des Brennraums (11) der Brennkraftmaschine (5) angeordnet ist.

5. Verfahren nach einem der vorhergehenden Ansprüche, **dadurch gekennzeichnet, dass** das dem Brennraum (11) der Brennkraftmaschine (5) zugeführte Mengenverhältnis von primären und sekundären Kraftstoff (4, 8) in Abhängigkeit von wenigstens einem fahrzeugseitigen Parameter für die Erhöhung der Gesamt-Kraftstoffeinspritzmenge mittels der Regel- und/oder Steuereinrichtung (21) geregelt und/oder gesteuert wird, wobei bevorzugt vorgesehen ist, dass der wenigstens eine fahrzeugseitige Parameter ein Gradient der Motordrehzahl und/oder ein Gradient der Turboladerdrehzahl und/oder ein Gradient des Ladedrucks und/oder ein Gradient der Gaspedalstellung und/oder ein Gradient des Gaspedalwegs und/oder ein Gradient der Einspritzmenge und/oder das Verbrennungsluftverhältnis ist.

6. Verfahren nach einem der vorhergehenden Ansprüche, **dadurch gekennzeichnet, dass** das dem Brennraum (11) der Brennkraftmaschine (5) zugeführte Mengenverhältnis von primären und sekundären Kraftstoff (4, 8) in Abhängigkeit von wenigstens einem Parameter der Fahrzeugumgebung für die Erhöhung der Gesamt-Kraftstoffeinspritzmenge mittels der Regel- und/oder Steuereinrichtung (21) geregelt und/oder gesteuert wird, wobei bevorzugt vorgesehen ist, dass der wenigstens eine Parameter der Fahrzeugumgebung mittels GPS-Daten und/oder mittels Aufnahmen wenigstens einer Bild-Erfassungseinrichtung, insbesondere einer Kamera, des Fahrzeugs (1) ermittelt wird.

7. Verfahren nach einem der vorhergehenden Ansprüche, **dadurch gekennzeichnet, dass** das Fahrzeug (1) eine Lambdasonde aufweist, und dass mittels der Regel- und/oder Steuereinrichtung (21) in Abhängigkeit von mittels der Lambdasonde gemessenen Messwerten für das Verbrennungsluftverhältnis und den aufgrund des aktuell eingestellten Mengenverhältnis von primären und sekundären Kraftstoff (4, 8) erwarteten Sollwerten für das Verbrennungsluftverhältnis die Funktion der Lambdasonde überprüft und/oder wenigstens ein Parameter der Lambdasonde, insbesondere die Empfindlichkeit der Lambdasonde, adaptiert und/oder angepasst wird.

8. Verfahren nach einem der vorhergehenden Ansprüche, **dadurch gekennzeichnet, dass** in der Regel- und/oder Steuereinrichtung (21), insbesondere mittels wenigstens eines Kennfelds, der zu erwartende zeitliche Verlauf des Drehmoments in Abhängigkeit von der Erhöhung der Gesamt-Kraftstoffeinspritzmenge gespeichert und/oder hinterlegt ist, und dass das Mengenverhältnis von primären und sekundären Kraftstoff (4, 8) in Abhängigkeit von diesem zu erwartenden zeitlichen Verlauf mittels der Regel- und/oder Steuereinrichtung (21) geregelt und/oder gesteuert wird.

9. Verfahren nach einem der vorhergehenden Ansprüche, **dadurch gekennzeichnet, dass** das Fahrzeug (1) ein Abgasrückführungssystem aufweist, und dass die Menge des rückgeführten Abgases mittels der Regel- und/oder Steuereinrichtung (21) in Abhängigkeit von dem Mengenverhältnis von primären und sekundären Kraftstoff (4, 8) gesteuert und/oder geregelt wird, wobei bevorzugt vorgesehen ist, dass bei einer Erhöhung des Anteils des sekundären Kraftstoffs (8) in dem Mengenverhältnis von primären und sekundären Kraftstoff (4, 8) die Menge des rückgeführten Abgases erhöht wird.

10. Verfahren nach einem der vorhergehenden Ansprüche, **dadurch gekennzeichnet, dass** ein Abgasstrang des Fahrzeugs (1) einen regenerierbaren Partikelfilter aufweist, und dass der Zeitpunkt, zu dem der Partikelfilter regeneriert wird, mittels der Regel- und/oder Steuereinrichtung (21) in Abhängigkeit von dem Mengenverhältnis von primären und sekundären Kraftstoff (4, 8) gesteuert und/oder geregelt wird, wobei bevorzugt vorgesehen ist, dass während einer Regeneration des Partikelfilters der Anteil des sekundären Kraftstoffs (8) in dem Mengenverhältnis von primären und sekundären Kraftstoff (4, 8) erhöht wird.

11. Vorrichtung zum Betreiben eines Fahrzeugs, insbesondere eines Nutzfahrzeugs und/oder zur Durchführung eines Verfahrens nach einem der vorhergehenden Ansprüche, wobei das Fahrzeug (1) eine erste Kraftstoff-Speichereinrichtung (3), insbesondere einen Kraftstofftank, aufweist, in der ein primärer Kraftstoff (4), insbesondere ein Dieselkraftstoff, zum Betreiben einer Brennkraftmaschine (5), insbesondere eines Dieselmotors, des Fahrzeugs (1) gespeichert ist, und wobei das Fahrzeug (1) eine zweite Kraftstoff-Speichereinrichtung (7), insbesondere einen Kraftstofftank, aufweist, in der ein, einen höheren Sauerstoffgehalt als der primäre Kraftstoff aufweisender Oxygenat-Kraftstoff als sekundärer Kraftstoff (8) zum Betreiben der Brennkraftmaschine (5) gespeichert ist,
**dadurch gekennzeichnet,**
**dass** eine Regel- und/oder Steuereinrichtung (21) vorgesehen ist, mittels der das einem Brennraum (11) der Brennkraftmaschine (5) zugeführte Mengenverhältnis von primären und sekundären Kraftstoff (4, 8) in Abhängigkeit von einer aktuellen und/oder zukünftigen Erhöhung der Gesamt-Kraftstoffeinspritzmenge in den Brennraum (11) regelbar und/oder steuerbar ist.

12. Vorrichtung nach Anspruch 11, **dadurch gekennzeichnet, dass** jeder Kräftstoff-Speichereinrichtung (3, 7) eine separate Zuführeinrichtung (15, 19, 27, 29), insbesondere eine separate Verbindungsleitung und/oder eine separate Einspritzdüse, zugeordnet ist, mittels der der jeweilige Kraftstoff (4, 8) dem Brennraum (11) zuführbar ist.

13. Vorrichtung nach Anspruch 12, **dadurch gekennzeichnet, dass** mittels der Zuführeinrichtungen (15, 19, 27, 29) der primäre und sekundäre Brennstoff (4, 8) unmittelbar dem Brennraum (11) der Brennkraftmaschine (5) zuführbar sind, und/oder dass mittels der Zuführeinrichtungen (15, 19, 27, 29) der primäre Brennstoff (4) unmittelbar dem Brennraum (11) der Brennkraftmaschine (5) und der sekundäre Brennstoff (8) einem dem Brennraum (11) Verbrennungsluft (37) zuführenden Ansaugtrakt (39) des Fahrzeugs (1) zuführbar ist.

14. Vorrichtung nach einem der Ansprüche 11 bis 13, **dadurch gekennzeichnet, dass** den Kraftstoff-Speichereinrichtungen (3, 7) eine gemeinsame Zuführeinrichtung (17, 33), insbesondere eine gemeinsame Verbindungsleitung und/oder eine gemeinsame Einspritzdüse, zugeordnet ist, mittels der die Kraftstoffe (4, 8) dem Brennraum (11) zuführbar sind, wobei bevorzugt vorgesehen ist, dass der Zuführbereich (31), an dem die Kraftstoffe der gemeinsamen Zuführeinrichtung (17, 33) zuführbar sind, in einem definierten Nahbereich (35) im Bereich des Brennraums (11) der Brennkraftmaschine (5) angeordnet ist.

15. Vorrichtung nach Anspruch 14, **dadurch gekennzeichnet, dass** der Zuführbereich (31), in Kraftstoff-Strömungsrichtung des primären Kraftstoffs (4) gesehen, stromab einer Filtereinrichtung zur Filterung des primären Kraftstoffs (4) und/oder stromab einer Fördereinrichtung (23), insbesondere einer Pumpe, zur Förderung des primären Kraftstoffs (4) und/oder stromab einer Kraftstoffverteilungs-Einrichtung (25), insbesondere eines Verteilerrohrs, zur Verteilung des primären Kraftstoffs (4) auf die mehreren Brennräume (11) der Brennkraftmaschine (5) angeordnet ist, und/oder dass der Zuführbereich (31), in Kraftstoff-Strömungsrichtung des sekundären Kraftstoffs (4) gesehen, stromab einer Filtereinrichtung zur Filterung des sekundären Kraftstoffs (8) und/oder stromab einer Fördereinrichtung (23), insbesondere einer Pumpe, zur Förderung des sekundären Kraftstoffs (8) und/oder stromab einer Kraftstoffverteilungs-Einrichtung (25), insbesondere eines Verteilerrohrs, zur Verteilung des sekundären Kraftstoffs (8) auf die mehreren Brennräume (11) der Brennkraftmaschine (5) angeordnet ist.

16. Fahrzeug, insbesondere Nutzfahrzeug, zur Durchführung eines Verfahrens nach einem der Ansprüche 1 bis 10 und/oder mit einer Vorrichtung nach einem der Ansprüche 11 bis 15.

## Claims

1. A method for operating a vehicle, in particular a commercial vehicle, wherein the vehicle (1) has a first fuel storage device (3), in particular a fuel tank, in which a primary fuel (4), in particular a diesel fuel, for operating an internal combustion engine (5), in particular a diesel engine, of the vehicle (1) is stored, and wherein the vehicle (1) has a second fuel storage device (7), in particular a fuel tank, in which an oxygenate fuel, having a higher oxygen content than the primary fuel, is stored as a secondary fuel (8) for operating the internal combustion engine (5),
**characterized**
**in that** a closed-loop and/or open-loop control device (21) is provided by means of which the quantity ratio of the primary and secondary fuels (4, 8) fed to a combustion chamber (11) of the internal combustion engine (5) is closed-loop and/or open-loop controlled as a function of a current and/or future increase in the total fuel injection quantity into the combustion chamber (11).

2. The method according to Claim 1, **characterized in that** if the increase in the total fuel injection quantity is smaller than a definitely predefined threshold value for the increase in the total fuel injection quantity, only the primary fuel (4) is fed to the combustion chamber (11), and **in that** if the increase in the total fuel injection quantity is greater than the definitely predefined threshold value for the increase in the total fuel injection quantity, the primary and the secondary fuels (4, 8) or only the secondary fuel (8) are/is fed to the combustion chamber (11).

3. The method according to Claim 1 or 2, **characterized in that** as the total fuel injection quantity progressively increases, the portion of the secondary fuel (8) in the quantity ratio of the primary and secondary fuels (4, 8) is increased by a definitely predefined amount by means of the closed-loop and/or open-loop control device (21), and **in that** as the total fuel injection quantity progressively increases the portion of the secondary fuel (8) in the quantity ratio of the primary and secondary fuels (4, 8) is reduced by a definitely predefined amount by means of the closed-loop and/or open-loop control device (21).

4. The method according to one of the preceding claims, **characterized in that** each fuel storage device (3, 7) is assigned a separate feed device (15, 17, 27, 29), in particular a separate connecting line and/or a separate injection nozzle by means of which the respective fuel (4, 8) is fed to the combustion chamber (11), and/or **in that** the fuel storage devices (3, 7) are assigned a common feed device (17, 33), in particular a common connecting line and/or a common injection nozzle by means of which the fuels (4, 8) are fed to the combustion chamber (11), wherein there is preferably provision that the feed region (31) to which the fuels (4, 8) of the common feed device (17, 33) are fed is arranged in a defined close region (35) in the vicinity of the combustion chamber (11) of the internal combustion engine (5).

5. The method according to one of the preceding claims, **characterized in that** the quantity ratio of the primary and secondary fuels (4, 8) fed to the combustion chamber (11) of the internal combustion engine (5) is closed-loop and/or open-loop controlled as a function of at least one vehicle-side parameter for increasing the total fuel injection quantity by means of the closed-loop and/or open-loop control device (21), wherein there is preferably provision that the at least one vehicle-side parameter is a gradient of the engine rotational speed and/or a gradient of the turbocharger rotational speed and/or a gradient of the charging pressure and/or a gradient of the accelerator pedal position and/or a gradient of the accelerator pedal travel and/or a gradient of the injection quantity and/or the combustion air ratio.

6. The method according to one of the preceding claims, **characterized in that** the quantity ratio of the primary and secondary fuels (4, 8) fed to the combustion chamber (11) of the internal combustion engine (5) is open-loop and/or closed-loop controlled as a function of at least one parameter of the surroundings of the vehicle for increasing the total fuel injection quantity by means of the closed-loop and/or open-loop control device (21), wherein there is preferably provision that the at least one parameter of the surroundings of the vehicle is determined by means of GPS data and/or by means of recordings of at least one image-capturing device, in particular a camera, of the vehicle (1).

7. The method according to one of the preceding claims, **characterized in that** the vehicle (1) has a lambda probe, and **in that** the function of the lambda probe is examined by means of the closed-loop and/or open-loop control device (21) as a function of measured values, measured by means of the lambda probe, for the combustion air ratio and the set point values, expected on the basis of the currently set quantity ratio of the primary and secondary fuels (4, 8), for the combustion air ratio, and/or at least one parameter of the lambda probe, in particular the sensitivity of the lambda probe, is adapted and/or adjusted.

8. The method according to one of the preceding claims, **characterized in that** the expected time profile of the torque is stored and/or saved in the closed-loop and/or open-loop control device (21) as a function of the increase to the total fuel injection quantity, in particular by means of a characteristic diagram, and **in that** the quantity ratio of the primary and secondary fuels (4, 8) is closed-loop and/or open-loop controlled as a function of this expected time profile by means of the closed-loop and/or open-loop control device (21).

9. The method according to one of the preceding claims, **characterized in that** the vehicle (1) has an exhaust gas recirculation system, and **in that** the quantity of the recycled exhaust gas is open-loop and/or closed-loop controlled by means of the closed-loop and/or open-loop control device (21) as a function of the quantity ratio of the primary and secondary fuels (4, 8), wherein there is preferably provision that when the portion of the secondary fuel (8) in the quantity ratio of the primary and secondary fuels (4, 8) is increased, the quantity of the recycled exhaust gas is increased.

10. The method according to one of the preceding claims, **characterized in that** an exhaust section of the vehicle (1) has a regeneratable particle filter, and **in that** the time at which the particle filter is regenerated is open-loop and/or closed-loop controlled by means of the closed-loop and/or open-loop control device (21) as a function of the quantity ratio of the primary and secondary fuels (4, 8), wherein there is preferably provision that during regeneration of the particle filter the portion of the secondary fuel (8) in the quantity ratio of the primary and secondary fuels (4, 8) is increased.

11. A device for operating a vehicle, in particular a commercial vehicle and/or for carrying out a method according to one of the preceding claims, wherein the vehicle (1) has a first fuel storage device (3), in particular a fuel tank, in which a primary fuel (4), in particular a diesel fuel, for operating an internal combustion engine (5), in particular a diesel engine, of the vehicle (1) is stored, and wherein the vehicle (1) has a second fuel storage device (7), in particular a fuel tank, in which an oxygenate fuel, having a higher oxygen content than the primary fuel, is stored as a secondary fuel (8) for operating the internal combustion engine (5),
**characterized**
**in that** a closed-loop and/or open-loop control device (21) is provided by means of which the quantity ratio of the primary and secondary fuels (4, 8) fed into a combustion chamber (11) of the internal combustion engine (5) can be closed-loop and/or open-loop controlled as a function of a current and/or future increase in the total fuel injection quantity into the combustion chamber (11).

12. The device according to Claim 11, **characterized in that** each fuel storage device (3, 7) is assigned a separate feed device (15, 19, 27, 29), in particular a separate connecting line and/or a separate injection nozzle, by means of which the respective fuel (4, 8) can be fed to the combustion chamber (11).

13. The device according to Claim 12, **characterized in that** the primary and secondary fuels (4, 8) can be fed directly to the combustion chamber (11) of the internal combustion engine (5) by means of the feed devices (15, 19, 27, 29), and/or **in that** the primary fuel (4) can be fed directly to the combustion chamber (11) of the internal combustion engine (5) and the secondary fuel (8) can be fed to an intake section (39), which feeds combustion air (37) to the combustion chamber (11), of the vehicle (1), by means of the feed devices (15, 19, 27, 29).

14. The device according to one of Claims 11 to 13, **characterized in that** the fuel storage devices (3, 7) are assigned a common feed device (17, 33), in particular a common connecting line and/or a common injection nozzle by means of which the fuels (4, 8) can be fed to the combustion chamber (11), wherein there is preferably provision that the feed region (31) at which the fuels can be fed to the common feed device (17, 33) is arranged in a defined close region (35) in the vicinity of the combustion chamber (11) of the internal combustion engine (5).

15. The device according to Claim 14, **characterized in that** the feed region (31) is arranged, viewed in the fuel flow direction of the primary fuel (4), downstream of a filter device for filtering the primary fuel (4) and/or downstream of a delivery device (23), in particular a pump, for delivering the primary fuel (4) and/or downstream of a fuel distribution device (25), in particular a distributor pipe, for distributing the primary fuel (4) to the plurality of combustion chambers (11) of the internal combustion engine (5), and/or **in that** the feed region (31) is arranged, viewed in the fuel flow direction of the secondary fuel (4), downstream of a filter device for filtering the secondary fuel (8) and/or downstream of a delivery device (23), in particular a pump, for delivering the secondary fuel (8) and/or downstream of a fuel distribution device (25), in particular a distributor pipe, for distributing the secondary fuel (8) to the plurality of combustion chambers (11) of the internal combustion engine (5).

16. A vehicle, in particular a commercial vehicle, for carrying out a method according to one of Claims 1 to 10 and/or having a device according to one of Claims 11 to 15.

## Revendications

1. Procédé pour faire fonctionner un véhicule, en particulier un véhicule utilitaire, le véhicule (1) présentant un premier dispositif de stockage de carburant (3), en particulier un réservoir de carburant, dans lequel est stocké un carburant primaire (4), en particulier un carburant diesel, pour faire fonctionner un moteur à combustion interne (5), en particulier un moteur diesel, du véhicule (1), et le véhicule (1) présentant un deuxième dispositif de stockage de carburant (7), en particulier un réservoir de carburant dans lequel est stocké un carburant oxygéné présentant une teneur en oxygène plus élevée que le carburant primaire, en tant que carburant secondaire (8), pour faire fonctionner le moteur à combustion interne (5),
**caractérisé en ce**
**qu'**un dispositif de régulation et/ou de commande (21) est prévu, au moyen duquel le rapport quantitatif de carburant primaire et secondaire (4, 8) acheminé à une chambre de combustion (11) du moteur à combustion interne (5) est régulé et/ou commandé en fonction d'une augmentation actuelle et/ou future de la quantité d'injection de carburant totale dans la chambre de combustion (11).

2. Procédé selon la revendication 1, **caractérisé en ce que** si l'augmentation de la quantité d'injection de carburant totale est inférieure à une valeur de seuil prédéfinie de manière définie de l'augmentation de la quantité d'injection de carburant totale, seul le carburant primaire (4) est acheminé à la chambre de combustion (11) et **en ce que** si l'augmentation de la quantité d'injection de carburant totale est supérieure à la valeur de seuil prédéfinie de manière définie de l'augmentation de la quantité d'injection de carburant totale, le carburant primaire et le carburant secondaire (4, 8) ou seulement le carburant secondaire (8) sont acheminés à la chambre de combustion (11).

3. Procédé selon la revendication 1 ou 2, **caractérisé en ce qu'**au moyen du dispositif de régulation et/ou de commande (21), en cas d'augmentation croissante de la quantité d'injection de carburant totale, la proportion de carburant secondaire (8) dans le rapport quantitatif de carburant primaire et de carburant secondaire (4, 8) est augmentée dans une mesure prédéfinie de manière définie, et **en ce qu'**au moyen du dispositif de régulation et/ou de commande (21), en cas d'augmentation décroissante de la quantité d'injection de carburant totale, la proportion de carburant secondaire (8) dans le rapport quantitatif de carburant primaire et de carburant secondaire (4, 8) est réduite dans une mesure prédéfinie de manière définie.

4. Procédé selon l'une quelconque des revendications précédentes, **caractérisé en ce qu'**à chaque dispositif de stockage de carburant (3, 7) est associé un dispositif d'acheminement séparé (15, 17, 27, 29), en particulier une conduite de liaison séparée et/ou une buse d'injection séparée, au moyen duquel ou de laquelle le carburant respectif (4, 8) est acheminé à la chambre de combustion (11), et/ou **en ce qu'**aux dispositifs de stockage de carburant (3, 7) est associé un dispositif d'acheminement commun (17, 33), en particulier une conduite de liaison commune et/ou une buse d'injection commune, au moyen de duquel ou de laquelle les carburants (4, 8) sont acheminés à la chambre de combustion (11), la région d'acheminement (31), au niveau de laquelle les carburants (4, 8) sont acheminés au dispositif d'acheminement commun (17, 33), étant de préférence disposée dans une région proche définie (35) dans la région de la chambre de combustion (11) du moteur à combustion interne (5).

5. Procédé selon l'une quelconque des revendications précédentes, **caractérisé en ce que** le rapport quantitatif de carburant primaire et de carburant secondaire (4, 8) acheminé à la chambre de combustion (11) du moteur à combustion interne (5) est régulé et/ou commandé en fonction d'au moins un paramètre du côté du véhicule pour l'augmentation de la quantité d'injection de carburant totale au moyen du dispositif de régulation et/ou de commande (21), l'au moins un paramètre du côté du véhicule étant de préférence un gradient du régime du moteur et/ou un gradient du régime du turbocompresseur et/ou un gradient de la pression de suralimentation et/ou un gradient de la position de la pédale d'accélération et/ou un gradient de la course de la pédale d'accélération et/ou un gradient de la quantité d'injection et/ou le rapport d'air comburant.

6. Procédé selon l'une quelconque des revendications précédentes, **caractérisé en ce que** le rapport quantitatif de carburant primaire et de carburant secondaire (4, 8) acheminé à la chambre de combustion (11) du moteur à combustion interne (5) est régulé et/ou commandé en fonction d'au moins un paramètre de l'environnement du véhicule pour l'augmentation de la quantité d'injection de carburant totale au moyen du dispositif de régulation et/ou de commande (21), l'au moins un paramètre de l'environnement du véhicule étant de préférence déterminé au moyen de données GPS et/ou au moyen d'enregistrements d'au moins un dispositif de détection d'image, en particulier une caméra, du véhicule (1).

7. Procédé selon l'une quelconque des revendications précédentes, **caractérisé en ce que** le véhicule (1) présente une sonde lambda et **en ce qu'**au moyen du dispositif de régulation et/ou de commande (21), le fonctionnement de la sonde lambda est contrôlé et/ou au moins un paramètre de la sonde lambda, en particulier la sensibilité de la sonde lambda, est adapté et/ou modifié, en fonction de valeurs de mesure pour le rapport d'air comburant mesurées au moyen de la sonde lambda et de valeurs de consigne pour le rapport d'air comburant attendu sur la base du rapport quantitatif actuellement ajusté du carburant primaire et du carburant secondaire (4, 8).

8. Procédé selon l'une quelconque des revendications précédentes, **caractérisé en ce que** dans le dispositif de régulation et/ou de commande (21), en particulier au moyen d'un champ caractéristique, l'évolution prévue du couple dans le temps en fonction de l'augmentation de la quantité d'injection de carburant totale est mémorisée et/ou consignée, et **en ce que** le rapport quantitatif du carburant primaire et du carburant secondaire (4, 8) est régulé et/ou commandé en fonction de cette évolution prévue dans le temps au moyen du dispositif de régulation et/ou de commande (21).

9. Procédé selon l'une quelconque des revendications précédentes, **caractérisé en ce que** le véhicule (1) présente un système de recirculation de gaz d'échappement et **en ce que** la quantité de gaz d'échappement recirculé est commandée et/ou régulée en fonction du rapport quantitatif du carburant primaire et du carburant secondaire (4, 8) au moyen du dispositif de régulation et/ou de commande (21), la quantité de gaz d'échappement recirculé étant de préférence augmentée dans le cas d'une augmentation de la proportion de carburant secondaire (8) dans le rapport quantitatif de carburant primaire et de carburant secondaire (4, 8).

10. Procédé selon l'une quelconque des revendications précédentes, **caractérisé en ce qu'**une ligne d'échappement du véhicule (1) présente un filtre à particules pouvant être régénéré, et **en ce que** l'instant auquel le filtre à particules est régénéré est commandé et/ou régulé au moyen du dispositif de régulation et/ou de commande (21) en fonction du rapport quantitatif de carburant primaire et de carburant secondaire (4, 8), la proportion de carburant secondaire (8) dans le rapport quantitatif de carburant primaire et de carburant secondaire (4, 8) étant de préférence augmentée pendant une régénération du filtre à particules.

11. Dispositif pour faire fonctionner un véhicule, en particulier un véhicule utilitaire et/ou pour mettre en oeuvre un procédé selon l'une quelconque des revendications précédentes, dans lequel le véhicule (1) présente un premier dispositif de stockage de carburant (3), en particulier un réservoir de carburant dans lequel est stocké un carburant primaire (4), en particulier un carburant diesel, pour faire fonctionner un moteur à combustion interne (5), en particulier un moteur diesel, du véhicule (1), et le véhicule (1) présentant un deuxième dispositif de stockage de carburant (7), en particulier un réservoir de carburant, dans lequel est stocké un carburant oxygéné présentant une teneur en oxygène plus élevée que le carburant primaire, en tant que carburant secondaire (8), pour faire fonctionner le moteur à combustion interne (5),
**caractérisé en ce**
**qu'**il est prévu un dispositif de régulation et/ou de commande (21) au moyen duquel le rapport quantitatif de carburant primaire et de carburant secondaire (4, 8) acheminé à une chambre de combustion (11) du moteur à combustion interne (5) peut être régulé et/ou commandé en fonction d'une augmentation actuelle et/ou future de la quantité d'injection de carburant totale dans la chambre de combustion (11).

12. Dispositif selon la revendication 11, **caractérisé en ce qu'**à chaque dispositif de stockage de carburant (3, 7) est associé un dispositif d'alimentation séparé (15, 19, 27, 29), en particulier une conduite de liaison séparée et/ou une buse d'injection séparée, au moyen duquel ou de laquelle le carburant respectif (4, 8) peut être acheminé à la chambre de combustion (11).

13. Dispositif selon la revendication 12, **caractérisé en ce qu'**au moyen des dispositifs d'acheminement (15, 19, 27, 29), le carburant primaire et le carburant secondaire (4, 8) peuvent être acheminés directement à la chambre de combustion (11) du moteur à combustion interne (5) et/ou **en ce qu'**au moyen des dispositifs d'acheminement (15, 19, 27, 29), le carburant primaire (4) peut être acheminé directement à la chambre de combustion (11) du moteur à combustion interne (5) et le carburant secondaire (8) peut être acheminé à un conduit d'admission (39) du véhicule (1) conduisant de l'air comburant (37) à la chambre de combustion (11).

14. Dispositif selon l'une quelconque des revendications 11 à 13, **caractérisé en ce qu'**aux dispositifs de stockage de carburant (3, 7) est associé un dispositif d'acheminement commun (17, 33), en particulier une conduite de liaison commune et/ou une buse d'injection commune, au moyen duquel ou desquelles les carburants (4, 8) peuvent être acheminés à la chambre de combustion (11), la région d'acheminement (31) au niveau de laquelle les carburants peuvent être acheminés au dispositif d'acheminement commun (17, 33) étant de préférence disposée dans une région proche définie (35) dans la région de la chambre de combustion (11) du moteur à combustion interne (5).

15. Dispositif selon la revendication 14, **caractérisé en ce que** la région d'acheminement (31), vue dans la direction d'écoulement de carburant du carburant primaire (4), est disposée en aval d'un dispositif de filtre pour filtrer le carburant primaire (4) et/ou en aval d'un dispositif de refoulement (23), en particulier d'une pompe, pour refouler le carburant primaire (4) et/ou en aval d'un dispositif de distribution de carburant (25), en particulier d'un tube de distribution, pour distribuer le carburant primaire (4) aux plusieurs chambres de combustion (11) du moteur à combustion interne (5), et/ou **en ce que** la région d'acheminement (31), vue dans la direction d'écoulement de carburant du carburant secondaire (4), est disposée en aval d'un dispositif de filtre pour filtrer le carburant secondaire (8) et/ou en aval d'un dispositif de refoulement (23), en particulier d'une pompe, pour refouler le carburant secondaire (8) et/ou en aval d'un dispositif de distribution de carburant (25), en particulier d'un tube de distribution, pour distribuer le carburant secondaire (8) aux plusieurs chambres de combustion (11) du moteur à combustion interne (5).

16. Véhicule, en particulier véhicule utilitaire pour mettre en oeuvre un procédé selon l'une quelconque des revendications 1 à 10 et/ou comprenant un dispositif selon l'une quelconque des revendications 11 à 15.
